(19) Europäisches Patentamt
European Patent Office
Office européen des brevets

(11) **EP 4 667 743 A1**

(12) **EUROPÄISCHE PATENTANMELDUNG**

(43) Veröffentlichungstag:
**24.12.2025 Patentblatt 2025/52**

(21) Anmeldenummer: **24183556.0**

(22) Anmeldetag: **20.06.2024**

(51) Internationale Patentklassifikation (IPC):
*F03D 13/35* (2016.01)   *F03D 17/00* (2016.01)

(52) Gemeinsame Patentklassifikation (CPC):
**F03D 13/35; F03D 17/016;** F05B 2260/966;
F05B 2270/326

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Wobben Properties GmbH
26607 Aurich (DE)**

(72) Erfinder:
• **KUBASIK, Andre
26603 Aurich (DE)**
• **SCHAPER, Ulf
27254 Staffhorst (DE)**
• **GIESLER, Matthias
26603 Aurich (DE)**

(74) Vertreter: **Eisenführ Speiser
Patentanwälte Rechtsanwälte PartGmbB
Postfach 10 60 78
28060 Bremen (DE)**

(54) **VERFAHREN ZUM ERFASSEN EINER MASSENUNWUCHT EINES AERODYNAMISCHEN ROTORS EINER WINDENERGIEANLAGE**

(57)   Die Erfindung betrifft ein Verfahren zum Erfassen einer Massenunwucht eines mehrere Rotorblätter aufweisenden Rotors einer Windenergieanlage, wobei die Rotorblätter in ihrem Blattwinkel verstellbar sind und eine Drehposition des Rotors als Rotorposition erfassbar ist, umfassend die Schritte: Betreiben der Windenergieanlage in einem Testbetrieb, in dem die Rotorblätter in eine einer Fahnenstellung ähnliche Testfahnenstellung gestellt werden, die von der Fahnenstellung um nicht mehr als einen Testwinkel abweicht und die Windenergieanlage keine Leistung erzeugt, Ermitteln wenigstens einer Stoppposition, in der der Rotor in dem Testbetrieb stehen bleibt, oder um die er auspendelt, und Ermitteln einer Unwuchtwinkelposition aus der wenigstens einen Stoppposition.

Fig. 3

**Beschreibung**

Die vorliegende Erfindung betrifft ein Verfahren zum Erfassen einer Massenunwucht eines mehrere Rotorblätter aufweisenden Rotors einer Windenergieanlage, also eines aerodynamischen Rotors einer Windenergieanlage. Die Erfindung betrifft auch eine Windenergieanlage, die ein solches Verfahren anwendet oder dazu zumindest vorbereitet ist.

Windenergieanlagen sind bekannt, sie erzeugen elektrische Leistung aus Wind. Wenn Windenergieanlagen Störungen im Betriebsverhalten zeigen, die durch fehlerhafte Massenauswuchtung der drehenden Hauptbauteile verursacht sein können, insbesondere durch die Rotorblätter, wird häufig mit Schwingungsmessungen im Betrieb die mutmaßliche Unwucht untersucht, um sie dann gegebenenfalls gezielt zu beheben. Eine solche Maßnahme kann Kosten für entsprechende Gutachter und Serviceteams verursachen, sowie Kosten durch Stillstandszeiten für Ein- und Ausbau entsprechender Messtechnik bedeuten.

Insoweit ist auch ungünstig, dass hierdurch Einfluss auf den Betrieb der Windenergieanlage genommen wird.

Andererseits müssen während der Auslegung einer Windenergieanlage Annahmen über Massenunwuchten getroffen werden, also Annahmen, in welcher Höhe Massenunwuchten auftreten können. Hieraus werden Grenzwerte für die Produktion erstellt, sodass bei der Produktion keine zu großen Massenunwuchten auftreten bzw. die entsprechenden Grenzwerte eingehalten werden. Das kann besonders bedeuten, dass drei Rotorblätter, die für dieselbe Windenergieanlage bestimmt sind, zueinander so ähnlich sind, dass keine oder keine zu große Unwucht auftritt. Beim Vertauschen mit Rotorblättern, die für eine andere, wenn auch baugleiche, Windenergieanlage bestimmt sind, können aber Unwuchten auftreten. Wenn es zu einer solchen Vertauschung von Rotorblättern aus verschiedenen Bausätzen kommt, oder wenn nachträglich Reparaturarbeiten ausgeführt werden, reichen die Verfahren aus der Produktion, die ansonsten Massenunwuchten vermeiden, oftmals nicht mehr aus, um zu gewährleisten, dass eine Windenergieanlage nur mit maximal derjenigen Massenunwucht betrieben wird, die in der Auslegung angenommen wurde.

Sollen solche Massenunwuchten später, also im Betrieb der Anlage, bestimmt werden, könnten Messungen im Anlagenbetrieb mit vorübergehend zusätzlich eingebauten Schwingungsaufnehmern eingesetzt werden. Solche Schwingungsaufnehmer sind oftmals Spezialmessgeräte, die den Einsatz eines Fremdgutachters erforderlich machen können. Es könnten auch Messungen mit anderen, in der Windenergieanlage vorhandenen Schwingungssensoren durchgeführt werden, wodurch ein Besuch vor Ort durch Fremdgutachter oder Serviceteams entbehrlich ist. Allerdings kann durch ungeeignete Messsensoren oftmals keine ausreichende Genauigkeit erreicht werden.

Es könnte auch versucht werden, eine Unwucht über die Auswertung eines Verlaufs der Winkelgeschwindigkeit des Rotors im Anlagenbetrieb zu ermitteln. Allerdings wird die gemessene Winkelgeschwindigkeit des Rotors im Anlagenbetrieb von Störgrößen beeinflusst, wie Blattfehlstellungen, einem ungleichmäßigen Generatormoment und auch Ungenauigkeiten im Messsystem wie z. B. einem Achsversatz bei Drehzahlmessung mittels Positionsaufnehmern im Schleifringkörper.

Der Erfindung liegt somit die Aufgabe zugrunde, zumindest eines der vorstehend genannten Probleme zu adressieren. Insbesondere soll ein Verfahren vorgeschlagen werden, bei dem möglichst automatisiert, allein mit in einer Windenergieanlage vorhandener Sensorik, Daten gewonnen und so ausgewertet werden, dass ein Rückschluss auf den Unwuchtzustand möglich wird. Das sollte möglichst erfolgen, ohne auf den Betrieb der Windenergieanlage Einfluss zu nehmen, um dadurch Kosten zu sparen. Zumindest soll zu bisher bekannten Verfahren eine alternative Lösung gefunden werden.

Erfindungsgemäß wird ein Verfahren gemäß Anspruch 1 vorgeschlagen. Es wird also ein Verfahren zum Erfassen einer Massenunwucht eines mehrere Rotorblätter aufweisenden Rotors einer Windenergieanlage vorgeschlagen. Es geht also um den aerodynamischen Rotor der Windenergieanlage. Die Rotorblätter dieser zugrunde gelegten Windenergieanlage können in ihrem Blattwinkel verstellt werden. Außerdem ist eine Drehposition des Rotors als Rotorposition erfassbar. Die Drehposition bzw. Rotorposition betrifft somit die Drehung des Rotors um die Rotorachse und die Rotorposition kann sich bspw. auf ein Rotorblatt beziehen, das insoweit ein Referenzblatt bildet. Bspw. kann eine Position, bei der das Referenzblatt mit einer Blattlängsachse senkrecht nach unten weist, als Position 0, also 0°, bezeichnet werden.

Es wird somit weiter vorgeschlagen, die Windenergieanlage in einem Testbetrieb zu betreiben, in dem die Rotorblätter in eine einer Fahnenstellung ähnliche Testfahnenstellung gestellt werden, die von der Fahnenstellung um nicht mehr als einen Testwinkel abweicht. Der Testwinkel beträgt vorzugsweise 10° bis 45°, insbesondere 10° bis 20°, weiter insbesondere 15°. Eine Fahnenstellung ist somit eine Stellung der Rotorblätter, bei der Wind, der die Windenergieanlage von vorne anströmt, auf die Rotorblätter keine Kraft in Drehrichtung des Rotors ausübt. Da der Wind nie exakt konstant aus einer Richtung ohne Schwankungen weht, können natürlich geringe Kräfte auftreten. Die Fahnenstellung kann dennoch wie beschrieben definiert werden, wobei die Fahnenstellung für diesen theoretischen Wind von vorne ausgelegt ist und, je nach Windenergieanlage, meist im Bereich von 90°, bezogen auf eine Rotorebene, liegt. In manchen Windenergieanlagen kann die Fahnenstellung bspw. auch 100° betragen. Mit anderen Worten ist jedes Rotorblatt in Fahnenstellung etwa mit einer Blattvorderkante nach vorne, also zum Wind, ausgerichtet, wenn die Windenergieanlage mit ihrem Rotor zum Wind ausgerichtet ist. Die Fahnenstellung ist dabei ein Fachbegriff und kann auch so beschrieben werden, dass hierbei die Rotorblätter im Wesentlichen parallel zum Wind ausgerichtet sind, wenn der Rotor zum Wind ausgerichtet ist. Die Testfahnenstellung ist zur Fahnenstellung ähnlich, sie kann sie auch umfassen, aber für die Testfahnenstellung ist vorgesehen, dass die Blattwinkel auch variiert werden, nämlich um maximal den Wert des Testwinkels.

Weiterhin ist vorgesehen, dass die Windenergieanlage in dem Testbetrieb keine Leistung erzeugt.

Es wird dann eine Stoppposition ermittelt, in der der Rotor in dem Testbetrieb stehenbleibt, oder um die er auspendelt. Je nach Reibung von Lagern des Rotors und je nach Unwucht kommt in Betracht, dass der Rotor beim Anhalten noch etwas um die Stoppposition pendelt, oder ohne Pendeln in die Stoppposition geht.

Theoretisch würde der Rotor beim Auspendeln um die Stoppposition auch letztlich in der Stoppposition anhalten, um die er zunächst gependelt ist. Durch Haftreibung kann aber eine leichte Abweichung zwischen der Position auftreten, um die der Rotor pendelt, und der, in der er letztlich anhält. In diesem Fall können zwei Stopppositionen aufgenommen werden, oder es kann ein Mittelwert zwischen diesen beiden Positionen gewählt werden. In diesem Fall zwei Stopppositionen aufzunehmen, wird besonders für den unten noch beschriebenen Fall vorgeschlagen, in dem sowieso zurfinalen Auswertung mehrere Stopppositionen aufgenommen werden.

Basierend auf der so wenigstens einen aufgenommenen Stoppposition wird dann eine Unwuchtwinkelposition bestimmt. Die Unwucht kann als Unwuchtmasse veranschaulicht werden, die außerhalb der Drehachse des Rotors liegt. Die Position dieser Unwuchtmasse kann durch ihren Abstand zur Drehachse und ihre Winkelposition bezogen auf einen Nullwinkel als Referenz beschrieben werden, wobei dieser Winkel als die Unwuchtwinkelposition bezeichnet wird.

Im einfachsten Fall kann die Unwuchtwinkelposition als Winkel der Stoppposition bezogen auf einen Nullwinkel, z. B. bezogen auf die Winkelposition eines Referenzrotorblatts, bezeichnet werden. Das ist besonders dann der Fall, wenn tatsächlich durch den Wind gar keine Drehkraft auf den Rotor wirkt, weil z. B. tatsächlich Windstille herrscht.

Es ist zu beachten, dass die Unwucht durch das Produkt der Unwuchtmasse und dem Abstand dieser Unwuchtmasse von der Drehachse definiert ist. Bei doppelter Unwuchtmasse und halbem Abstand zur Drehachse, oder doppeltem Abstand zur Drehachse und halber Unwuchtmasse ergibt sich somit dieselbe Unwucht. Die Unwuchtwinkelposition ist allerdings immer dieselbe.

Somit wurde erkannt, dass durch eine solche einfache Beobachtung des Auspendelns des Rotors, wenn dazu der beschriebene Testbestrieb geschaffen wird, zumindest die Unwuchtwinkelposition bestimmt werden kann. Es ist dazu keine zusätzliche Messtechnik erforderlich, wenn ein Drehsensor für den aerodynamischen Rotor vorhanden ist, der die Drehposition des aerodynamischen Rotors erfassen kann. Dabei ist diese Beobachtung im Testbetrieb meist ohne Veränderung des Betriebs der Windenergieanlage möglich, denn ein solcher Testbetrieb kann besonders bei sehr schwachem Wind vorgesehen sein, bei dem die Windenergieanlage auch ohne Testbetrieb keine Leistung mehr erzeugt. In diesem Fall, wenn also die Windgeschwindigkeit entsprechend gering geworden ist, können die Voraussetzungen des Testbetriebs geschaffen werden, in dem die Rotorblätter dann in die Testfahnenstellung gestellt werden und der Generator der Windenergieanlage nicht angesteuert wird, sodass die Windenergieanlage keine Leistung erzeugt, und insbesondere auch keine Leistung erzeugen würde, sollte sich der Rotor doch etwas drehen.

Dadurch, dass somit zumindest die Unwuchtwinkelposition mit geringem, insbesondere ohne zusätzlichen apparativen Aufwand erfasst werden kann, ist es möglich, dies entsprechend ohne oder ohne nennenswerte Zusatzkosten auf jeglichen Windenergieanlagen bspw. eines Herstellers und/oder eines Windparks zu implementieren. Dadurch kann umfassende Kenntnis über die Unwuchtzustände all dieser Windenergieanlagen erlangt werden. Daraus kann gegebenenfalls ein Rückschluss auf die Zustände der Windenergieanlage gezogen werden oder ein Hinweis für mögliche Veränderungen in der Produktion der Rotorblätter abgeleitet werden.

Die Testfahnenstellung ist insoweit ein Blattwinkel, der von allen Blättern angefahren wird, wobei bei gleichmäßiger Anströmung des Rotors nur ein sehr geringes aerodynamisches Moment erzeugt wird. Dieses aerodynamische Moment sollte vorzugsweise größer als null sein, um dadurch die Möglichkeit zu behalten, das Unwuchtmoment bzw. einen Unwuchtbetrag über die Windgeschwindigkeit zu quantifizieren. Es kommt aber auch in Betracht, dass der Blattwinkel für alle Rotorblätter so eingestellt wird, dass kein aerodynamisches Moment erzeugt wird.

Besonders ist vorgesehen, dass die Testfahnenstellung eine Stellung der Rotorblätter in Bezug auf ihren Blattwinkel beschreibt, die im Bereich der Fahnenstellung variieren kann. Diese Variation kann besonders im Bereich von 10° - 45° um die Fahnenstellung liegen. Insbesondere kann sie bei 10° - 20°, weiter insbesondere bei 15° um die Fahnenstellung liegen, oder sie kann in einem Bereich von der Fahnenstellung bis zu einem Blattwinkelbereich von 10°- 45° weniger als die Fahnenstellung, insbesondere 10° - 20°, weiter insbesondere 15° weniger als die Fahnenstellung liegen.

Insbesondere wird also vorgeschlagen, dass die Testfahnenstellung in einem Bereich von 75° - 90° variieren kann, wenn die Fahnenstellung 90° entspricht. Die Testfahnenstellung kann also auch die Fahnenstellung selbst einnehmen, wird für viele Testpunkte, die auch nachfolgend noch weiter beschrieben werden, einen von der Fahnenstellung geringfügig abweichenden Blattwinkel einnehmen, um dadurch ein geringes aerodynamisches Moment durch den Wind zu erfahren, das zur Quantifizierung der Massenunwucht genutzt werden kann.

Eine Testfahnenstellung kann somit beinhalten, dass die Rotorblätter in der Nähe einer vordefinierten Fahnenstellung etwas in ihrem Blattwinkel verändert werden, aber insbesondere innerhalb von 15° um die vordefinierte Fahnenstellung. Insbesondere kann die Variation in einem Bereich von 75° - 105° erfolgen, was besonders dann gilt, wenn die Fahnenstellung bei 90° definiert ist. Wenn die Fahnenstellung einen anderen Wert aufweist, z. B. 100°, verschiebt sich dieser Variationsbereich entsprechend.

Eine Massenunwucht kann vereinfachend und synonym auch als Unwucht beschrieben werden.

Vorzugsweise wird vorgeschlagen, dass im Testbetrieb auf den Rotor nur eine geringe Drehkraft aus dem Wind wirkt, die insbesondere kleiner als 5 % eines Nennmomentes eines Generators der Windenergieanlage ist. Die Drehkraft kann im Bereich von 0 bis 5%, vorzugsweise 0 bis 1% und insbesondere bei etwa 0,3% liegen. Diese Werte sind für Windgeschwindigkeiten im Bereich von 0 bis 5m/s zu erwarten bzw. für einen solchen Windgeschwindigkeitsbereich durch entsprechende Einstellung des Blattwinkels einzustellen. Hierzu wurde besonders erkannt, dass auch in der Testfahnenstellung eine geringe Kraft auf den Rotor in Drehrichtung wirken kann, wenn eine geringe Abweichung zur Fahnenstellung eingestellt wird, wenn der Testwinkel also nicht null ist. Diese kann zur Auswertung nützlich sein, wie nachfolgend noch erläutert wird, sie sollte aber nicht zu groß sein, denn dann würde sich der Rotor drehen und nicht mehr in der Stoppposition zum Halten kommen.

Gemäß einem Aspekt wird vorgeschlagen, dass mehrere Stopppositionen jeweils zusammen mit einer zugeordneten Windgeschwindigkeit aufgenommen werden, insbesondere bei unterschiedlichen Windgeschwindigkeiten. Dazu wird außerdem vorgeschlagen, aus den mehreren Stopppositionen mit zugeordneten Windgeschwindigkeiten eine fingierte Stoppposition bei Windstille zu berechnen. Dazu wird vorgeschlagen, aus der fingierten Stoppposition die Unwuchtwinkelposition abzuleiten, wobei insbesondere die fingierte Stoppposition als die Unwuchtwinkelposition genommen wird.

Wie schon erläutert, kann die Stoppposition bei Windstille der Unwuchtwinkelposition entsprechen. Durch Haftreibung können dabei leichte Abweichungen entstehen. Bereits diese kleinen Abweichungen können durch Aufnahme mehrerer Messwerte gegebenenfalls herausgemittelt werden.

Gemäß dem beschriebenen Aspekt wird aber ermöglicht, die Stoppposition, die sich bei Windstille einstellen würde, auch ohne Windstille zu bestimmen. Besonders bei unterschiedlichen Windgeschwindigkeiten können sich unterschiedliche Stopppositionen einstellen, weil die Windgeschwindigkeit trotz Fahnenstellung eine geringe Drehkraft auf den Rotor ausübt. Eine solche Drehkraft kann berechnet, zumindest abgeschätzt werden, da die aerodynamischen Eigenschaften der Rotorblätter bekannt sind. Besonders kann ein Auftriebskoeffizient bekannt sein, aus dem bei bekannter Windgeschwindigkeit und Anströmrichtung, damit also auch bekanntem Blattwinkel, ein Auftrieb und damit eine resultierende Drehkraft, also ein resultierendes Drehmoment, auf den Rotor berechnet werden kann.

Bei unterschiedlichen Windgeschwindigkeiten ergeben sich dann auch unterschiedliche Stopppositionen und aus diesen und der Kenntnis der unterschiedlichen Drehkraft aus dem Wind kann auf eine anzunehmende, also die fingierte, Stoppposition bei Windstille geschlossen werden.

Vereinfacht ausgedrückt könnte eine erste Stoppposition bei einer ersten und eine zweite Stoppposition bei einer zweiten Windgeschwindigkeit aufgenommen werden. Wäre - als vereinfachende und veranschaulichende Annahme - die zweite Windgeschwindigkeit so viel größer, dass sie zu einer doppelten Drehkraft führt, würde die erste Stoppposition genau in der Mitte zwischen der zweiten Stoppposition und der fingierten Stoppposition bei Windstille liegen. Diesem vereinfachten Beispiel liegt natürlich die vereinfachende Annahme zugrunde, dass eine Auslenkung der Massenunwucht aus der fingierten Stoppposition zu einer Rückstellkraft führt, die proportional zu einem Auslenkungswinkel ist, wenn der Auslenkungswinkel klein ist. Es wird zudem davon ausgegangen, dass die Auftriebskraft proportional zum Quadrat der Windgeschwindigkeit ist. Es wird für diese Betrachtung somit die Stoppposition über dem Quadrat der Windgeschwindigkeit dargestellt. Die beispielhaft genannte doppelte Drehkraft bei der zweiten Windgeschwindigkeit gegenüber der ersten würde bei einer zweiten Windgeschwindigkeit auftreten, die etwa dem V2-fachen der ersten Windgeschwindigkeit entspricht.

Vorzugsweise werden aber sehr viele Stopppositionen aufgenommen, jeweils mit der zugehörigen Windgeschwindigkeit, um dadurch die Berechnungsqualität zu verbessern. Besonders kann hier bspw. über die Methode der kleinsten Quadrate die fingierte Stoppposition bei Windstille berechnet werden. Bei Annahme der oben beschriebenen Proportionalität kann die fingierte Stoppposition mithilfe einer sogenannten Pseudoinversen berechnet werden. Alternativ kann auch einfach abgewartet werden, bis ausreichend Daten bei niedriger Windgeschwindigkeit aufgelaufen sind, sodass man auch ohne ein Extrapolationsverfahren in Richtung Windstille auskommt, um die Stoppposition zu finden. Als Stoppposition kann dann die Position genommen werden, um die der Rotor im Mittel auspendelt.

Gemäß einem Aspekt wird vorgeschlagen, dass zum Erfassen eines Unwuchtbetrags als Größe der Massenunwucht der Blattwinkel der Rotor so eingestellt wird, dass sich eine Drehkraft aus dem Wind auf den Rotor ergibt, die den Rotor aus einer Stoppposition und/oder Unwuchtwinkelposition in eine Auslenkposition dreht oder in eine anhaltende Drehbewegung versetzt, wobei die Auslenkposition bzw. die Drehbewegung erfasst wird. Die Auslenkposition beschreibt dabei eine Drehposition des Rotors relativ zu einer Ruhelage bei Windstille und damit relativ zur Unwuchtwinkelposition, denn ohne Kraft auf den Rotor kommt dieser bei der Unwuchtwinkelposition zur Ruhe Außerdem wird in Abhängigkeit von der Auslenkposition bzw. in Abhängigkeit von der anhaltenden Drehbewegung der Unwuchtbetrag ermittelt.

Durch das Einstellen der Blattwinkel, also insbesondere durch das Verstellen der Blattwinkel aus der Fahnenstellung heraus, wird somit gezielt eine Drehkraft aus dem Wind auf den Rotor zugelassen und zur Auswertung der Massenunwucht herangezogen. Die Drehkraft führt dazu, dass eine Unwuchtmasse, mit der die Unwucht zusammen mit dem Abstand der Unwuchtmasse vom Drehpunkt beschrieben werden kann, angehoben wird. Bis zu einem Drehwinkel von 90°, bezogen auf eine Drehposition, bei der die Unwuchtmasse ganz unten ist, also in einer 6-Uhr-Position, nimmt eine Rückstellkraft durch die Unwuchtmasse mit steigendem Drehwinkel zu. Je geringer die Unwuchtmasse ist, bei gleichem Abstand zur Drehachse, umso weiter kann somit der Rotor ausgelenkt bzw. die Unwuchtmasse angehoben werden.

Ist also die Stoppposition bei Windstille bzw. die Unwuchtwinkelposition bekannt, so kann die Auslenkung durch die Drehkraft aus dem Wind erfasst werden. Es kann also erfasst werden, um wie viel sich der Rotor von der Stoppposition bzw. Unwuchtwinkelposition weitergedreht hat. Stellt sich eine stabile Auslenkposition ein, lässt diese Rückschluss auf den Unwuchtbetrag, also die Größe der Unwucht, zu. Je größer diese Auslenkung ist, umso kleiner ist die Unwucht, also der Unwuchtbetrag.

Führt die Drehkraft aus dem Wind zu einer anhaltenden Drehbewegung, dreht sich der Rotor also um die genannte 90°-Auslenkung hinaus, so kann daraus zumindest abgeleitet werden, dass die Unwucht bzw. der Unwuchtbetrag so klein sind, dass es möglich war, den Rotortrotz Unwucht um die genannte 90°-Verdrehung weiterzudrehen. Es kommt aber auch in Betracht, die resultierende ungleichmäßige Drehbewegung zu beobachten und daraus, also aus ihrem konkreten Verlauf, auf die Größe des Unwuchtbetrags rückzuschließen. Je geringer die Unwucht, also der Unwuchtbetrag, ist, umso gleichförmiger dreht sich der Rotor.

Es kommt aber auch in Betracht, dass das Erfassen der Unwucht nur bis zu einem gewissen Betrag erforderlich ist und bei einer kleineren Unwucht diese vernachlässigt werden kann. In dem Fall wird gemäß einem Aspekt vorgeschlagen, dass die Rotorblätter so verstellt werden, dass sich eine Drehkraft aus dem Wind einstellt, die so schwach ist, dass sie einen Rotor nur in eine anhaltende Drehbewegung versetzen kann, wenn die Unwucht kleiner als eine zu erfassende Mindestunwucht ist. Führt dann also das Verstellen der Rotorblätter zu einer anhaltenden Drehbewegung, ist die Unwucht so klein, dass sie vernachlässigt werden kann.

Insbesondere wird vorgeschlagen, dass der Unwuchtbetrag unter weiterer Berücksichtigung einer erfassten, insbesondere gemessenen Windgeschwindigkeit ermittelt wird. Wird die Windgeschwindigkeit erfasst, kann aufgrund der genauen Kenntnis des Rotorblatts und dem eingestellten Blattwinkel die Drehkraft der Größe nach bestimmt werden. Aus einer sich ergebenden Auslenkung kann somit die Unwucht genau berechnet werden.

Messungenauigkeiten, die sich durch eine Beeinflussung eines zur Messung der Windgeschwindigkeiten verwendeten Anemometers auf der Gondel ergeben, können durch Verbesserungen der Messung und/oder Korrekturmaßnahmen verringert werden. Das wird besonders dann vorgeschlagen, wenn die Windmessung auf der Gondel erheblich durch die Rotorposition beeinflusst wird: In einer "Y-Stellung", wenn ein Rotorblatt senkrecht nach unten weist, kann der Wind stärker durch die oberen Rotorblätter durchwehen und es kann durch einen Düseneffekt am Anemometer eine höhere Windgeschwindigkeit gemessen werden, als tatsächlich als mittlere Windgeschwindigkeit in der Rotorfläche vorliegt. Wenn hingegen ein Blatt in einer 12 Uhr-Stellung ist, also senkrecht nach oben weist, kann das Anemometer abgeschattet werden.

Als Lösung wird vorgeschlagen, dass zwei Anemometer auf der Gondel genutzt werden, die seitlich um etwa oder wenigstens einen Rotorblattdurchmesser versetzt installiert werden, deren durchschnittliches Messsignal genutzt wird. Außerdem oder alternativ kann eine letzte unverfälschte Windgeschwindigkeitsmessung vor einem Stoppvorgang gespeichert und für Auswertungen in den darauffolgenden Minuten weitergenutzt werden.

Außerdem oder alternativ wird vorgeschlagen, dass der Unwuchtbetrag unter weiterer Berücksichtigung einer mittleren Drehkraft ermittelt wird. Insbesondere kann diese Drehkraft wie beschrieben aus der Windgeschwindigkeit ermittelt werden, in Kombination mit den aerodynamischen Eigenschaften des Rotors, also der Rotorblätter. Es kommt aber auch in Betracht, dass aus der Beschleunigung des Rotors bei Kenntnis des Massenträgheitsmomentes des Rotors die Drehkraft bestimmt wird.

Außerdem oder alternativ kommt in Betracht, dass der konkret eingestellte Blattwinkel berücksichtigt wird. Auch daraus kann in Kenntnis des Windes und in Kenntnis der genauen aerodynamischen Eigenschaften die aerodynamisch auf den Rotor wirkende Drehkraft bestimmt werden.

All dies können Voraussetzungen sein, um aus der Auslenkposition und/oder aus der anhaltenden Drehbewegung den Unwuchtbetrag zu bestimmen.

Wenn die Unwuchtwinkelposition noch nicht bekannt ist, also noch nicht bestimmt wurde, kann die Auslenkposition nicht unmittelbar erfasst werden, da sie sich relativ zu dieser Unwuchtwinkelposition beziffert. Dann kann stattdessen einfach die Drehposition erfasst werden, also die Position des Rotors in Bezug auf eine beliebige Referenzposition. Es können dann für verschiedene Windgeschwindigkeiten verschiedene Drehpositionen aufgenommen werden, und mit diesen kann ein Gleichungssystem zusammen mit der jeweiligen Windgeschwindigkeit aufgestellt werden. Das Gleichungssystem kann, wenn ausreichend Messungen mit unterschiedlichen Windgeschwindigkeiten aufgenommen wurden, nach der Unwuchtwinkelposition und dem Unwuchtbetrag aufgelöst werden. Auch dies kann mit Hilfe einer Pseudoinversen erfolgen.

Gemäß einem Aspekt wird vorgeschlagen, dass in dem Testbetrieb mehrere Rotorpositionen in zeitlicher Abfolge aufgezeichnet werden, wobei, wenn der Rotor dabei auspendelt, Umkehrpositionen erfasst werden, in denen der Rotor seine Drehrichtung umkehrt. Der Rotor pendelt dann also um die Stoppposition aus. Es wird weiter vorgeschlagen, dass in Abhängigkeit von den Umkehrpositionen die Stoppposition erfasst wird. Das erfolgt insbesondere so, dass ein Mittelwert der Umkehrpositionen verwendet wird und insbesondere wird dieser Mittelwert als Stoppposition erfasst. Hier wurde besonders erkannt, dass beim Auspendeln um die Stoppposition die Umkehrpositionen im Wesentlichen gleichmäßig um die Stoppposition verteilt sind und daher aus ihrem Mittelwert die Stoppposition gut erfasst werden kann. Dabei wurde auch erkannt, dass die Position, an der der Rotor tatsächlich anhält, durch Haftreibung verfälscht sein kann bzw. auch bei Windstille Haftreibung dazu führt, dass der Rotor nicht exakt bei der Unwuchtwinkelposition anhält. Durch die Verwendung der Umkehrpositionen wird dieses Problem vermieden.

Es wurde erkannt, dass die erste Umkehrposition den größten Abstand zur Stoppposition aufweist. Die zweite Umkehrposition weist einen geringeren Abstand zur Stoppposition auf, und daher würde ein Mittelwert zwischen erster und zweiter Umkehrposition von der idealen Stoppposition in Richtung zur ersten Umkehrposition hin abweichen. Das gleiche Problem tritt zwischen der dritten und vierten Umkehrposition auf. Auch hier würde ein Mittelwert zwischen der dritten und vierten Umkehrposition von der tatsächlichen Stoppposition in Richtung zur dritten Umkehrposition abweichen. Diese Abweichung ist damit auch in Richtung zur ersten Umkehrposition. Es kann sich also ein systematischer Fehler in Richtung zur ersten Umkehrposition ergeben.

Dieser systematische Fehler kann dadurch verringert werden, dass mehrere Stoppvorgänge, also mehrere Auspendelvorgänge, bei denen der Rotor um die Stoppposition auspendelt, aufgenommen werden. Es kommt aber auch in Betracht, dass zwei Mittelwerte aufgenommen werden, nämlich einer mit Berücksichtigung der ersten Umkehrposition und ein zweiter ohne Berücksichtigung der ersten Umkehrposition. Wird die erste Umkehrposition nicht berücksichtigt, ist die zweite Umkehrposition dann diejenige mit dem größten Abstand zur Stoppposition und es ergibt sich dann ein systematischer Fehler in Richtung zur zweiten Umkehrposition, also in die andere Richtung. Dadurch können zwei Mittelwerte gebildet werden, die sich fast oder im Wesentlichen aufhebende systematische Fehler aufweisen, und daher wird vorgeschlagen, einen Mittelwert von diesen beiden Mittelwerten zu bilden. Dies kann dadurch vereinfacht werden, dass bei der Mittelwertbildung von allen Umkehrpositionen die erste nur zu 50 % berücksichtigt wird.

Gemäß einem Aspekt wird vorgeschlagen, dass von einer Pendelbewegung des Rotors eine Periodendauer oder Pendelfrequenz erfasst wird, und die Massenunwucht m*l dem Betrage nach in Abhängigkeit von der erfassten Periodendauer bzw. der erfassten Pendelfrequenz bestimmt wird, vorzugsweise in Abhängigkeit von einer Neigung der Rotorachse relativ zu einer horizontalen Ebene, wobei insbesondere die Massenunwucht dem Betrag nach bestimmt wird mit der Berechnungsformel:

$$m*l = k_0*(2*\pi/T)^2*J/g/\cos(\alpha_T)$$

oder

$$m*l = k_0*(2*\pi/T)^2*J/g \text{ bzw.}$$

$$m*l = k_0*(2*\pi*f)^2*J/g/\cos(\alpha_T)$$

oder

$$m*l = k_0*(2*\pi*f)^2*J/g$$

mit

m*l: Betrag der Massenunwucht,
T: Periodendauer,

$$f = 1/T:$$

Pendelfrequenz,
J: Massenträgheitsmoment des Rotors um seine Rotorachse,
g: Erdbeschleunigung
$\alpha_T$: Neigungswinkel der Rotorachse zur horizontalen Ebene,
$k_0$: Kompensationsfaktor mit Werten zwischen 1 und 1,5,

wobei insbesondere eine kleine Pendelbewegung zu Grunde gelegt wird, bei der der Rotor nicht mehr als 60°, insbesondere nicht mehr als 30° zwischen zwei Umkehrpunkten der Pendelbewegung zurücklegt.

Hier wurde erkannt, dass die Massenunwucht auch dem Betrage nach gut aus der Pendelbewegung berechnet werden kann. Das gilt zumindest für kleine Pendelbewegungen. Besonders bei solchen kleinen Pendelbewegungen kann eine der genannten Berechnungsvorschriften verwendet werden. Der Neigungswinkel, der auch als Tilt bezeichnet werden kann, kann besonders im Bereich von 0° bis 10° liegen. Ist er 0°, ist der Term $\cos(\alpha_T)$ 1 und damit entbehrlich, der Term kann aber auch bei Neigungswinkeln, die nicht 0 sind, vernachlässigt werden. Daher sind Berechnungsvorschriften mit und ohne diesen Term angegeben.

Es wurde erkannt, dass die Massenunwucht dem Betrage nach etwas größer ist, als sich bei den angegebenen Berechnungsvorschriften für $k_0 = 1$ ergeben würde, was durch einen Wert von etwas mehr als $k_0=1$ berücksichtigt werden kann.

Von der Massenunwucht m*l brauchen die beiden Werte für die Masse m und den Abstand vom Mittelpunkt I nicht bekannt zu sein. Wenn eine Ausgleichsmasse montiert werden soll, kann ein gewünschter Abstand I gewählt werden, und die Masse m dann entsprechend berechnet werden.

Gemäß einem Aspekt wird vorgeschlagen, dass ein Zusammenhang zwischen dem Unwuchtbetrag und optional der Unwuchtwinkelposition einerseits und eingestelltem Blattwinkel, erfasster Windgeschwindigkeit und erfasster Auslenkposition oder Drehposition andererseits in einem Lernverfahren angelernt werden. Hier wurde besonders berücksichtigt, dass die Zusammenhänge zwischen dem Unwuchtbetrag einerseits und dem Blattwinkel, der Windgeschwindigkeit und der Auslenkposition andererseits nichtlineare Anteile aufweisen können, sodass lineare Regressionsverfahren nicht optimal sind. Durch ein Lernverfahren, das insbesondere ein neuronales Netz einsetzen kann, können solche Zusammenhänge erfasst werden und auch Nichtlinearitäten dadurch berücksichtigen.

Insbesondere wird vorgeschlagen, dass in mehreren Lerndurchläufen bei unterschiedlichen Windgeschwindigkeiten der Unwuchtbetrag und der eingestellte Blattwinkel variiert werden und die Auslenkposition oder die Drehposition jeweils aufgenommen wird. Der Unwuchtbetrag kann dadurch variiert werden, dass entsprechende Unwuchtsgewichte besonders in einem Rotorblatt angeordnet werden. Es kommt auch in Betracht, dass eine Testwindenergieanlage zum Anlernen verwendet wird und das Ergebnis für andere Windenergieanlagen übernommen werden kann, insbesondere für baugleiche Windenergieanlagen.

Soll mit dem Lernverfahren ein Zusammenhang angelernt werden, bei dem die Unwuchtwinkelposition nicht bekannt ist, wird vorgeschlagen, den Zusammenhang statt in Abhängigkeit von der Auslenkposition in Abhängigkeit von der Drehposition herzustellen. In diesem Fall kann vorgesehen sein, außerdem einen Zusammenhang zwischen der Unwuchtwinkelposition einerseits und dem eingestellten Blattwinkel, der erfassten Windgeschwindigkeit und dem Drehwinkel andererseits herzustellen.

Gemäß einem Aspekt wird vorgeschlagen, dass das Verfahren zum Identifizieren der Massenunwucht ausgeführt oder ausgelöst wird, wenn ein Trudelbetrieb und/oder ein Verstellen der Rotorblätter in eine Fahnenstellung durch eine Umweltvorgabe, insbesondere eine Vorgabe zum Anhalten der Windenergieanlage wegen eines Schattenwurfs, oder wegen einer betrieblichen Vorgabe, insbesondere zur Überprüfung einer Sicherheitskette, ausgelöst wird, und/oder das Verfahren zum Identifizieren der Massenunwucht ausgeführt oder ausgelöst wird, indem in einer Windmangelphase bei geringer vorhandener Windgeschwindigkeit, insbesondere, wenn die Windgeschwindigkeit unterhalb einer vorgegebenen Einschalt-Windgeschwindigkeit liegt, gezielt der Testbetrieb ausgelöst wird, indem die Rotorblätter gezielt in die Testfahnenstellung gedreht werden, um die Massenunwucht zu identifizieren.

Hier wird besonders vorgeschlagen, dass für das Identifizieren der Massenunwucht Betriebsarten der Windenergieanlage abgewartet werden, in denen die Windenergieanlage in einen Betrieb versetzt wird, in dem sie keine Leistung erzeugt oder zumindest in einen Trudelbetrieb versetzt wird. Dadurch kann das Identifizieren der Massenunwucht ausgeführt werden, ohne in die reguläre Leistungserzeugung einzugreifen und damit ohne die jährliche Energieerzeugung zu verringern.

Gemäß einem Aspekt wird vorgeschlagen, dass eine Identifikation der Massenunwucht ständig oder zumindest wiederholt durchgeführt wird, wenn ein Trudelbetrieb und/oder eine Betriebssituation zum Verstellen der Rotorblätter in eine Fahnenstellung auftritt, um Werte der Massenunwucht zu aktualisieren und/oder eine auftretende Massenunwucht zu identifizieren, insbesondere, um eine Selbstdiagnose durchzuführen.

Hier wurde besonders erkannt, dass das vorgeschlagene Verfahren zum Identifizieren der Massenunwucht ohne nennenswerten Aufwand durchgeführt werden kann, solange die Anlage nicht in einem Leistung erzeugenden Betrieb ist. Sobald die Windenergieanlage also in einen Trudelbetrieb verfällt oder eine Betriebssituation auftritt, einschließlich einer Umweltvorgabe, die ein Verstellen der Rotorblätter in die Fahnenstellung einleitet, kann das Verfahren durchgeführt werden.

Dadurch ist es möglich, dieses Verfahren häufig durchzuführen und damit viele Werte für die Massenunwucht zu erhalten bzw. auch recht früh Werte für die Massenunwucht zu erhalten. Damit kann eine auftretende Massenunwucht schnell erkannt und ihre Veränderung, insbesondere eine Vergrößerung der Massenunwucht, ebenfalls schnell erkannt werden, woraus gegebenenfalls Maßnahmen eingeleitet werden können. Diese können bis dahin reichen, dass Servicepersonal gerufen wird, sollte die Massenunwucht ein Maß überschreiten, das einen sicheren Betrieb der Windenergieanlage gefährden würde.

Gemäß einem Aspekt wird vorgeschlagen, dass das Verfahren in einem Windpark und/oder für eine zur Überwachung vorgesehene Gruppe von Windenergieanlagen durchgeführt wird. Es wird also besonders vorgeschlagen, mehrere Windenergieanlagen einer solchen Gruppe zu überwachen und in ihrer Gesamtheit zu betrachten, insbesondere Ergebnisse gegenüberzustellen. Eine solche Gruppe von Windenergieanlagen kann als ein Windpark vorhanden sein, die Windenergieanlagen wären dann also in dem Windpark gruppiert; es kommt aber auch in Betracht, dass entweder nur Windenergieanlagen eines Teils eines Windparks gemeinsam betrachtet werden oder auch eine Gruppe von Windenergieanlagen, die über mehrere Windparks und/oder mehrere nicht in einem Windpark gruppierte Windenergieanlagen reicht.

Das Überwachen in einer solchen Gruppe erfolgt so, dass für jede der Windenergieanlagen die Massenunwucht identifiziert und insbesondere die so identifizierten Massenunwuchten und/oder Veränderungen der Massenunwuchten ausgewertet werden, um einen Gesamtzustand der Windenergieanlagen dieser Gruppe bzw. des Windparks zu bewerten. Eine solche Bewertung unter Berücksichtigung so vieler Windenergieanlagen ist vorteilhaft und ist durch das vorgeschlagene Verfahren ohne nennenswerten Aufwand möglich. Das wird daher hiermit ausgenutzt.

Insbesondere kann eine Bewertung einer Komponentenfertigung durchgeführt werden. Massenunwuchten am Rotor, was üblicherweise die Rotorblätter betrifft, können somit ein Maß dafür sein, wie unterschiedlich die Rotorblätter gefertigt wurden. Ist die Massenunwucht an einem solchen Rotor gering, ist auch die Fertigungstoleranz gering. Wenn eine solche geringe Massenunwucht für alle Windenergieanlagen einer Gruppe festgestellt werden kann, lässt dies insgesamt den Schluss auf eine hohe Fertigungsgenauigkeit zu. Andererseits können auftretende Massenunwuchten auf Fertigungsungenauigkeiten schließen lassen. Sofern eine Massenunwucht an einer Windenergieanlage auftritt, ansonsten bei den übrigen Windenergieanlagen der Gruppe nicht, um ein vereinfachendes Beispiel zu nennen, kann dies einen Hinweis auf einen Einzelfehler geben.

Andererseits ermöglicht die Identifizierung von Massenunwuchten auch dem Betrage nach an vielen Windenergieanlagen einer Gruppe, die nämlich insbesondere in demselben Werk gefertigt wurden, eine statistische Auswertung. Es kann erkannt werden, wie stark die Fertigungsschwankungen in dem betreffenden Werk grundsätzlich sind.

Außerdem oder alternativ kann ein Vertauschen von Rotorblättern zwischen Windenergieanlagen identifiziert oder überprüft werden. Besonders dann, wenn zwei Windenergieanlagen eine signifikante Massenunwucht aufweisen, die jeweils auf ein Blatt als Ursache hinweisen, so kann, wenn sich diese Massenunwuchten entsprechen, auf vertauschte Rotorblätter geschlossen werden. Gegebenenfalls kann ein solcher Verdacht durch eine ergänzte Prüfung vor Ort verifiziert werden. Darauf aufbauend kann erkannt werden, wieso es zu einer solchen Vertauschung gekommen ist.

Außerdem oder alternativ können Lebensdauerprognosen für den Windpark bzw. die Gruppe verbessert werden. Hier wurde besonders erkannt, dass Lagerverschleiße, aber auch andere durch Schwingungen verursachte Ermüdungserscheinungen, auf eine Massenunwucht zurückzuführen sein können. Zumindest kann eine Massenunwucht eine solche Ermüdungserscheinung verstärken. Durch die Identifizierung von Massenunwuchten bzw. der entsprechenden Beträge für die Anlagen der gesamten Gruppe kann somit eine umfassende Verbesserung der Lebensdauer für diese Gruppe erreicht werden.

Gemäß einem Aspekt wird vorgeschlagen, dass als Vorbedingung zum Ermitteln der Stoppposition, der Auslenkposition und/oder der Drehbewegung eines, mehrere oder alle Kriterien der folgenden Liste geprüft werden:

Ein Kriterium ist festzustellen, dass keine Bremse betätigt ist. Dadurch wird sichergestellt, dass sich der Rotor frei drehen kann.

Ein weiteres Kriterium ist, dass kein Generatormoment eingestellt ist. Auch dadurch wird sichergestellt, dass das freie Pendeln des Rotors gewährleistet ist.

Ein Kriterium ist festzustellen, dass kein Eisansatz vorliegt. Das Verfahren kann auch mit Eisansatz ausgeführt werden, die dabei erkannte Massenunwucht ist allerdings überwiegend auf einen solchen Eisansatz zurückzuführen, sodass ein Rückschluss auf eine eisfreie Unwucht kaum möglich ist.

Ein Kriterium kann sein zu prüfen, dass Lagertemperaturen und Lagerfettungen ausreichende Lagerschmierung erkennen lassen. Auch hier wurde erkannt, dass für das vorgeschlagene Verfahren ein möglichst leichtes, reibungsloses oder zumindest reibungsarmes Auspendeln zu Grunde gelegt wird, das dadurch sichergestellt werden kann.

Ein weiteres Kriterium ist zu prüfen, ob keine Lagerschäden erkannt oder vermutet wurden. Solche Lagerschäden können das Auspendeln ebenfalls beeinflussen, sodass diese Prüfung vorgeschlagen wird.

Als weiteres Kriterium wird vorgeschlagen zu prüfen, ob die Blattwinkel aller Rotorblätter denselben Wert aufweisen. Dies ist zum einen wichtig, damit eine leichte Drehkraft bzw. aerodynamisches Drehmoment aus dem Wind gegebenenfalls möglichst gleichmäßig auftritt. Anderenfalls besteht auch die Gefahr, dass unterschiedliche Windgeschwindigkeiten in unterschiedlichen Höhen bei unterschiedlich eingestellten Rotorblättern zu einer ungleichmäßigen Bewegung führen könnten.

Außerdem kann ein Massenschwerpunkt des Rotorblatts, bezogen auf die Nabe, an der die Rotorblätter montiert sind, durch die Verstellung des Blattwinkels ebenfalls verändert werden. Wenn also die Rotorblätter unterschiedliche Blattwinkel aufweisen, kann eine Massenunwucht auftreten, obwohl die Rotorblätter der Anlage aber tatsächlich identisch sind und bei gleichen Blattwinkeln sich keine oder eine geringere Massenunwucht einstellen würde.

Als ein Kriterium wird vorgeschlagen zu prüfen, ob alle Blattwinkelsensoren funktionieren. Auch das hat zum Ziel, gleiche Rotorblätter sicherstellen zu können. Es ist aber auch wichtig, den genauen Blattwinkel zu kennen, wenn aus dem Blattwinkel der Rotorblätter zusammen mit erfasstem Wind ein aerodynamisches Drehmoment berechnet werden soll.

Ein weiteres Kriterium kann sein zu überprüfen, ob eine Rotorlagemessung zur Erfassung der Rotorposition funktioniert. Besonders wurde hier erkannt, dass zum Identifizieren der Unwuchtwinkelposition die Rotorposition auch entsprechend gut, also mit hoher Genauigkeit, bekannt sein sollte.

Ein weiteres Kriterium ist zu prüfen, ob eine Windrichtungsnachführung aktiv ist. Hier geht es also um die Verstellung der Azimutposition der Windenergieanlage, sodass die Windenergieanlage immer zum Wind weist. Für das vorgeschlagene Verfahren sollte die Anlage möglichst optimal zum Wind ausgerichtet sein; eine Rotorebene, in der sich der Rotor dreht, sollte möglichst senkrecht zur Windrichtung stehen, was durch die Windrichtungsnachführung sichergestellt werden kann. Anderenfalls können bspw. Schräganströmungen auftreten, die die Messung verfälschen können.

Gemäß einem Aspekt wird vorgeschlagen, dass die Windgeschwindigkeit mittels eines Windgeschwindigkeitsmessgerätes erfasst wird, insbesondere mittels eines Anemometers, das auf einer Gondel der Windenergieanlage angeordnet ist, und/oder die Windgeschwindigkeit aus Betriebsdaten der Windenergieanlage ermittelt wird, und in beiden Fällen, die Windgeschwindigkeit vor dem Trudelbetrieb erfasst wird und als Windgeschwindigkeit bei Erreichen und Anhalten in der Stoppposition verwendet wird.

Hier wurde besonders erkannt, dass eine lokale Windmessung an der Windenergieanlage, bei der gerade ein Auspendeln stattfindet erschwert sein kann, da die Windenergieanlage dann nur langsam, oder fast gar nicht dreht. Wenn Windmessdaten von Nachbaranlagen verwendet werden sollen, um den Wind an der auspendelnden Windenergieanlage zu schätzen, kann das zusätzlich dadurch erschwert sein, dass Thermik sehr lokal den Wind verändern kann. Der Rückschluss von Windmessungen der Nachbaranlagen auf den Wind an der auspendelnden Anlage ist dann nicht mehr oder nur mit großen Ungenauigkeiten möglich.

Es wird daher vorgeschlagen, die Windgeschwindigkeit vorher zu erfassen, also vor einem Stillstand, wenn sich die Windenergieanlage noch ausreichend dreht. Dann kann sowohl eine Messung mit Anemometer, als auch eine Schätzung oder Windgeschwindigkeit, also eine Ermittlung der Windgeschwindigkeit aus Betriebsdaten noch gute Werte liefern. Beides kann auch kombiniert werden, indem z.B. ein Mittelwert aus Messung und Schätzung gebildet wird.

Um die Genauigkeit weiter zu verbessern, können viele Auspendelversuche gemacht werden. In dem Fall können Wettersituationen, die große Mess- und/oder Schätzprobleme verursachen, wie solche, bei denen eine große Thermik auftritt, von einer Statistik bzw. Mittelwertbildung ausschließen.

Genauigkeitsverbesserungen der Messung und/oder Schätzung können durchgeführt werden, um dadurch auch die Genauigkeit der Erfassung der Massenunwucht zu verbessern. Dazu können besonders Maßnahmen durchgeführt werden, wie weiter oben zur Verbesserung der Messgenauigkeit erläutert wurde.

Gemäß einem Aspekt wird vorgeschlagen, dass in Abhängigkeit von der identifizierten Massenunwucht, insbesondere in Abhängigkeit von der ermittelten Unwuchtwinkelposition und dem Unwuchtbetrag, eine erste Ausgleichsposition und ein erstes Ausgleichsgewicht bestimmt werden und das erste Ausgleichsgewicht an der ersten Ausgleichsposition befestigt wird. Somit kann durch diese Erfassung der Massenunwucht nach Ort und Größe ein Ausgleich geschaffen werden und ein solcher Ausgleich kann unmittelbar aus der identifizierten Massenunwucht berechnet werden.

Insbesondere ist vorgesehen, dass nach Befestigung des ersten Ausgleichsgewichts die Identifikation einer Massenunwucht wiederholt wird, um eine zweite Ausgleichsposition und ein zweites Ausgleichsgewicht zu bestimmen und das zweite Ausgleichsgewicht an der zweiten Ausgleichsposition zu befestigen. Hier geht es besonders darum, dass das Befestigen solcher Ausgleichgewichte schrittweise verfeinert werden kann.

Es wurde aber auch erkannt, dass sich eine ideale Position zum Befestigen eines Ausgleichsgewichts in der Rotorebene an einer Position befinden kann, an der kein Rotorblatt ist. Es sollten dann wenigstens zwei Ausgleichsgewichte befestigt werden, nämlich in unterschiedlichen Rotorblättern. Hierzu kann zunächst das eine, besonders größere Ausgleichsgewicht befestigt werden, und anschließend das Identifizieren der Rotorunwucht wiederholt werden, bevor das zweite Ausgleichsgewicht befestigt wird.

Außerdem oder alternativ ist vorgesehen, dass das erste und/oder zweite Ausgleichsgewicht zusammen mit der ersten bzw. zweiten Ausgleichsposition so bestimmt werden, dass das erste bzw. zweite Ausgleichsgewicht in oder an einer bzw. der Nabe und/oder einem Spinner und/oder einem Rotorblatt befestigt wird. Es wurde erkannt, dass durch die Befestigung in einem Rotorblatt ein geringeres Ausgleichsgewicht genügen kann, wenn dies in einem entsprechenden Abstand von der Drehachse befestigt wird. Dafür ist der Spinner und/oder die Nabe leichter zugänglich. Dort würde ein größeres Ausgleichsgewicht erforderlich sein, wobei aber auch ein größeres Ausgleichsgewicht dort gut befestigt werden könnte.

Erfindungsgemäß wird auch eine Windenergieanlage vorgeschlagen, nämlich eine Windenergieanlage mit einem mehrere Rotorblätter aufweisenden Rotor, wobei die Rotorblätter in ihrem Blattwinkel verstellbar sind und eine Drehposition des Rotors als Rotorposition erfassbar ist, wobei die Windenergieanlage dazu vorbereitet ist, ein Verfahren zum Erfassen einer Massenunwucht auszuführen, das folgende Schritte umfasst:

- Betreiben der Windenergieanlage in einem Testbetrieb, in dem

  - die Rotorblätter in eine einer Fahnenstellung ähnliche Testfahnenstellung gestellt werden, die von der Fahnenstellung um nicht mehr als einen Testwinkel abweicht und

  - die Windenergieanlage keine Leistung erzeugt,

- Ermitteln wenigstens einer Stoppposition, in der der Rotor in dem Testbetrieb stehen bleibt, oder um die er auspendelt, und

- Ermitteln einer Unwuchtwinkelposition aus der wenigstens einen Stoppposition.

Die Windenergieanlage kann insbesondere dadurch dazu vorbereitet sein, das Verfahren auszuführen, dass ein solches Verfahren auf einem Prozessrechner der Windenergieanlage implementiert ist, oder auf einer anderen Recheneinheit. Insbesondere kann eine Betriebssteuerung ein solches Verfahren beinhalten, das Verfahren kann also als Teil der Betriebssteuerung implementiert sein.

Gemäß einem Aspekt weist die Windenergieanlage einen Prozessrechner auf und ist dazu vorbereitet, ein Verfahren gemäß einem der vorstehend beschriebenen Aspekte auszuführen. Insbesondere kann das Verfahren dazu auf dem Prozessrechner implementiert sein bzw. der Prozessrechner ist dazu vorbereitet, das Verfahren auszuführen. Damit kann mit der Windenergieanlage all das erreicht werden, was vorstehend in Aspekten zu dem Verfahren beschrieben wurde. Ebenfalls können somit die beschriebenen Vorteile für die Windenergieanlage erreicht werden.

Es wird auch ein Windpark vorgeschlagen, der mehrere Windenergieanlagen gemäß wenigstens einem vorstehend erläuterten Aspekt aufweist. Insbesondere kann erreicht werden, dass in diesem Windpark in mehreren Windenergieanlagen ein Verfahren zum Identifizieren einer Massenunwucht ausgeführt werden kann. Damit ist es möglich, in diesem Windpark ein umfassendes Bild über die Unwuchtsituation im Park auf einfache Art und Weise aufzunehmen.

Die Erfindung wird nachfolgend exemplarisch anhand von Ausführungsformen unter Bezugnahme auf die begleitenden Figuren näher erläutert.

Figur 1 zeigt eine Windenergieanlage in einer schematischen Darstellung.

Figuren 2 und 3 zeigen schematisch unterschiedliche Rotorstellungen.

Figur 4 zeigt schematisch einen Rotor einer Windenergieanlage gemäß den Figuren 2 und 3 zur Erläuterung von Rotorpositionsbezeichnungen.

Figur 5 zeigt ein Diagramm mit einer windgeschwindigkeitsabhängigen Ruhelage.

Figur 6 zeigt ein Diagramm mit zwei unterschiedlichen Ruhepunktkennlinien für unterschiedliche Unwuchtmassen.

Figur 7 zeigt ein Diagramm zum Veranschaulichen eines Auspendelns eines Rotors mit außermittigem Schwerpunkt.

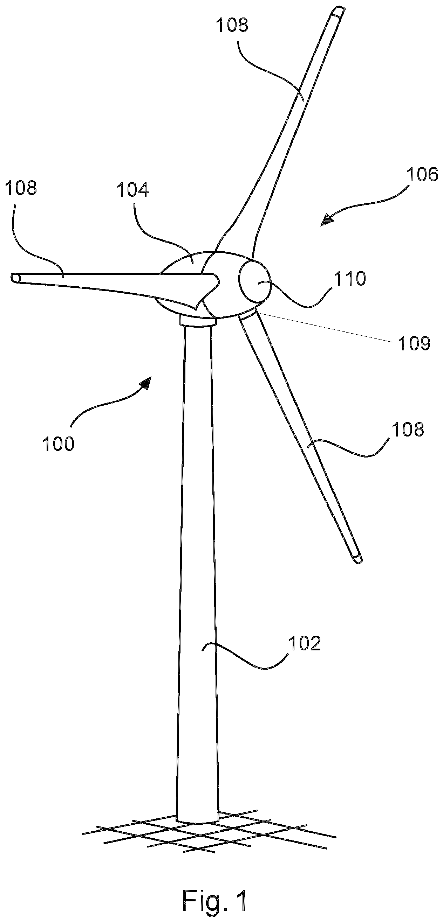

**Figur 1** zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

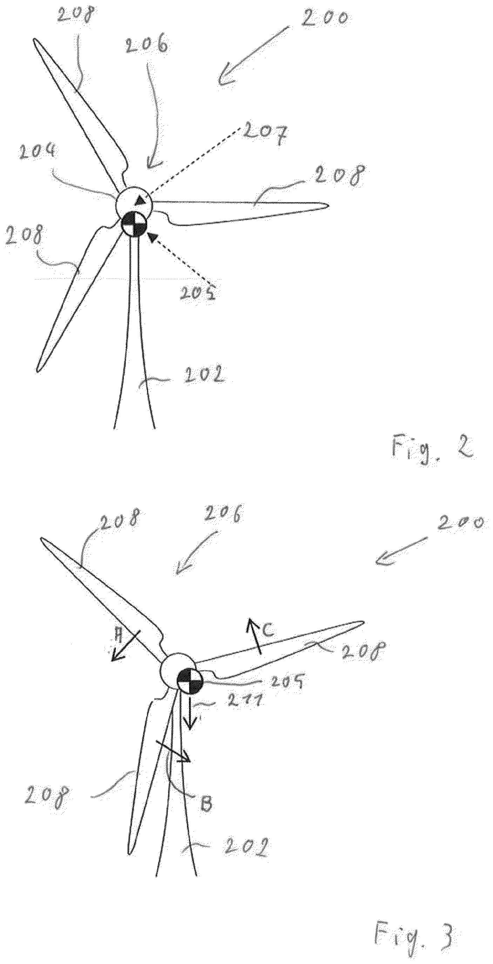

Grundgedanken der Erfindung sollen anhand der Figuren 2 und 3 erläutert werden.

Es soll immer dann, wenn bei geringer Windgeschwindigkeit oder Windstille der Rotor mit Rotorblättern in Fahnenstellung oder in der Fahnenstellung ähnlichen Testfahnenstellung trudelt, der Verlauf der Rotorposition aufgezeichnet werden. Unter diesem Trudeln ist hier somit der Testbetrieb zu verstehen, in dem Rotorblätter in eine einer Fahnenstellung ähnlichen Testfahnenstellung gestellt werden. Im Falle einer Unwucht wird die schwere Seite des Rotors unten stehenbleiben, wie ein ruhendes Pendel. Da auch in Fahnenstellung und besonders in der Testfahnenstellung Wind ein antreibendes Moment am Rotor bewirkt, wird bei zunehmendem Wind das Pendel mehr und mehr aus seiner Ruheposition ausgelenkt, und zwar umso weiter, je stärker der Wind ist und je schwächer die Massenunwucht. Aus dem Zusammenhang heraus lässt sich, wenn genügend Daten gesammelt sind, abschätzen, ob eine Massenunwucht vorhanden ist, wie groß sie ist, und in welcher Richtung am Rotor sie liegt.

**Figuren 2 und 3** zeigen eine Windenergieanlage 200 in unterschiedlichen Positionen, sodass für die Figuren 2 und 3 teilweise dieselben Bezugszeichen verwendet werden. Die Windenergieanlage 200 weist einen Rotor 206 mit drei Rotorblättern 208 und einer Rotordrehachse 207 auf, wobei der Rotor 206 drehbar in einer Gondel 204 auf einem Turm 202 gelagert ist. Zur Veranschaulichung ist ein außermittiger Schwerpunkt 205 als Symbol dargestellt.

Wenn keine Windgeschwindigkeit vorliegt, wird sich eine Ruheposition einstellen, bei welcher der Schwerpunkt des Rotors unterhalb der Rotordrehachse zur Ruhe kommt. Das ist in Figur 2 veranschaulichend dargestellt.

Wenn eine geringe Windgeschwindigkeit vorliegt, so kann sie ein aerodynamisches Moment aufbauen, wenn sich die Rotorblätter nicht in einer idealen Fahnenstellung befinden. Dies wird dazu führen, dass der Rotor leicht weitergedreht wird, und sich folglich eine Ruhelage einstellt, bei welcher der Schwerpunkt 205 leicht angehoben wird. Das ist in Figur 3 veranschaulicht. Dazu sind in Figur 3 für jedes der Rotorblätter 208 aerodynamische Kräfte A, B bzw. C eingezeichnet. Sie wirken zusammen auf den Rotor 206, führen zu dem aerodynamischen Moment und können den Schwerpunkt 205 anheben, nämlich gegen die Schwerkraft 211.

Bei niedrigen Windgeschwindigkeiten beobachtet man dabei einen Zusammenhang zwischen

- der Windgeschwindigkeit und

- der Winkelabweichung, also einer Auslenkung, der sich einstellenden Ruhelage von der Schwerpunktlage. Diese Winkelabweichung bzw. Auslenkung zeigt Figur 3 im Vergleich zu Figur 2.

In der Annahme, dass in den Figuren 2 und 3 der Rotor 206 jeweils zum Stehen gekommen ist, zeigen die beiden Figuren jeweils unterschiedliche Stopppositionen, nämlich in Figur 2 bei Windstille und/oder idealer Fahnenstellung und in Figur 3 bei geringem Wind, der zum Anheben des außermittigen Schwerpunktes führt.

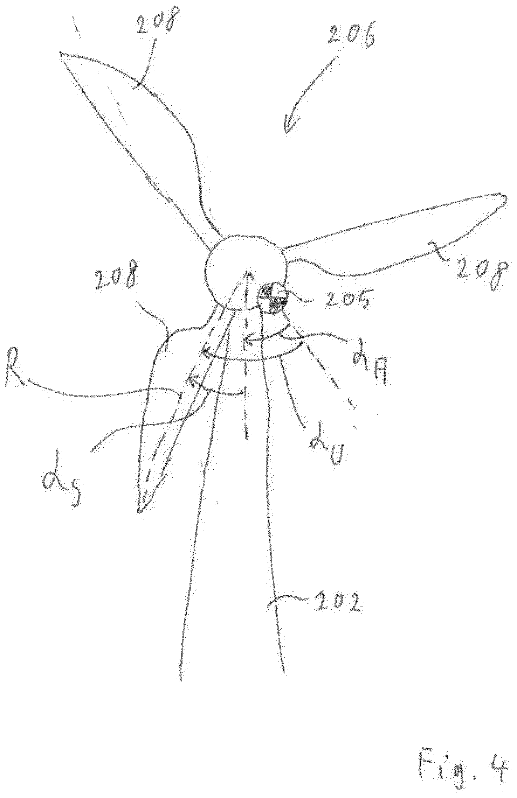

**Figur 4** erläutert die Bezeichnung einiger Winkelpositionen für einen Rotor 206. Der besseren Übersichtlichkeit halber sind teilweise dieselben Bezugszeichen wie in Figuren 2 und 3 verwendet worden.

Die Stellung des Rotors 206 der Figur 4 entspricht etwa der Stellung gemäß Figur 3. Dabei zeigt die Figur 4 einen Stoppwinkel $\alpha_S$, der einen Stopppositionswinkel bzw. die Stoppposition bezeichnet. Die Begriffe Stoppwinkel, Stopppositionswinkel und Stoppposition können synonym verwendet werden. Außerdem ist ein Unwuchtwinkel $\alpha_U$ gezeigt, der die Unwuchtwinkelposition angibt. Die Begriffe Unwuchtwinkel und Unwuchtwinkelposition können synonym verwendet werden.

Der Stoppwinkel $\alpha_S$ und der Unwuchtwinkel $\alpha_U$ beziehen sich auf eine Referenz R, die auch synonym als Referenzposition bezeichnet werden kann. Diese Referenz ist grundsätzlich frei wählbar, und wurde hier zur Veranschaulichung als Blattlängsachse des einen Rotorblattes 208 gewählt. Die Stellung dieses Rotorblattes bzw. dieses Rotorblatt selbst bildet somit die Referenz.

Weiterhin ist in Figur 4 ein Auslenkungswinkel $\alpha_A$ gezeigt, der die Auslenkung des Schwerpunktes 205, und damit auch einer Unwuchtmasse, aus einer Ruhelage bei Windstille beschreibt. In Figur 2 befindet sich der Rotor und damit der Schwerpunkt 205 in einer solchen Ruhelage bei Windstille und die Auslenkung bzw. der Auslenkungswinkel $\alpha_A$ ist daher in Figur 2 null.

Der Unwuchtwinkel $\alpha_U$ ist ein fester Winkel, der nicht von der Rotorstellung abhängt, wohingegen der Stoppwinkel $\alpha_S$ und der Auslenkungswinkel $\alpha_A$ nicht fest sind und insbesondere je nach Windgeschwindigkeit variieren. Figur 2 zeigt den Rotor 206 in einer Stoppposition bei Windstille und daher ist in Figur 2 der Stoppwinkel $\alpha_S$ mit dem Unwuchtwinkel $\alpha_U$ identisch und der Auslenkungswinkel $\alpha_A$ ist null.

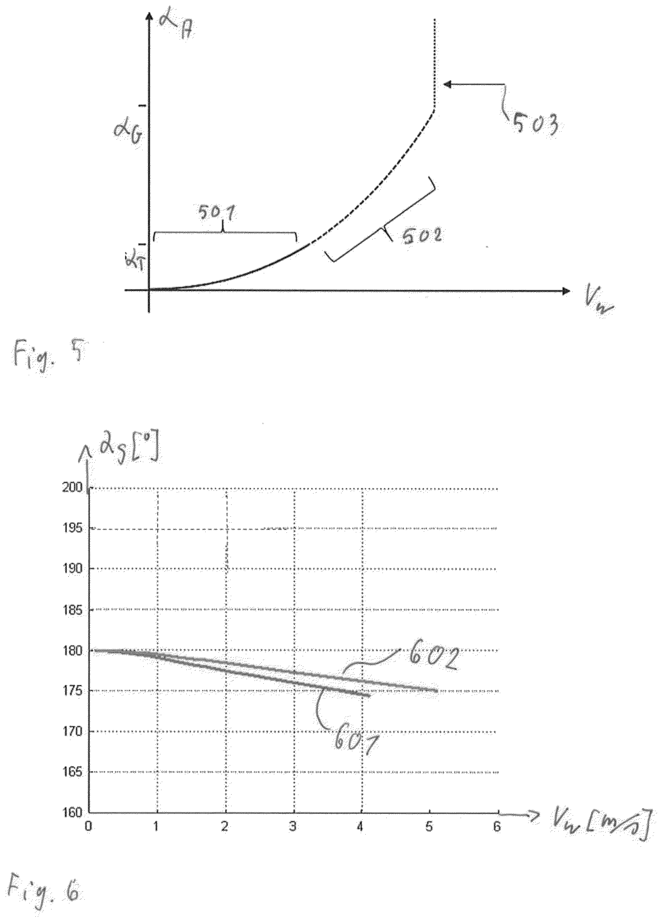

**Figur 5** veranschaulicht Zusammenhänge zwischen Windgeschwindigkeit Vw und Auslenkung $\alpha_A$. Die Abszisse zeigt die Windgeschwindigkeit Vw und die Ordinate eine resultierende Auslenkung. Die Achsen sind dabei ohne Einheiten, da die Zusammenhänge allgemein, insbesondere unabhängig von der Größe der Unwucht erläutert werden sollen. Die Figur 5 zeigt somit schematisch die Abweichung des Rotors von einer Ruhelage bei Windstille bzw. die Auslenkung des Rotors in Abhängigkeit von der Windgeschwindigkeit.

Wenn das aerodynamische Drehmoment quadratisch mit der Windgeschwindigkeit zunimmt, während der Hebelarm der Gravitationskraft, als ein daraus resultierendes Rückstellmoment, nur näherungsweise linear mit der Rotorlageabweichung zunimmt, also für kleine Auslenkungen, wird dieser Zusammenhang quantitativ quadratisch sein. Jedoch sind aufgrund der Reynoldszahlabhängigkeit der Auftriebsbeiwerte auch nichtquadratische Zusammenhänge möglich. Spätestens wenn die Ruhelage um etwa 30° Rotorwinkel von der Schwerpunktlage abweicht, die Auslenkung also 30° beträgt, wird kein quadratischer Zusammenhang mehr vorliegen, da mit weiterer Rotordrehung der Hebelarm des Rückstellmoments kaum weiter zunehmen kann.

In jedem Fall wird es eine Grenzwindgeschwindigkeit geben, und einen zugehörigen Grenzauslenkungswinkel, bzw. eine Grenzauslenkung, ab dem bzw. der die aerodynamische Kraft so stark ist, dass sich keine Ruhelage einstellen wird, sodass sich der Rotor also (bei wechselnder bzw. schwankender Geschwindigkeit) immer weiterdreht.

Diese Zusammenhänge sind in Figur 5 erläutert, die einen ersten Bereich 501 mit näherungsweise quadratischem Zusammenhang zwischen Windgeschwindigkeit und Auslenkung zeigt, und einen zweiten Bereich 502 mit nicht quadratischem Zusammenhang zwischen Windgeschwindigkeit und Auslenkung. Am Ende des ersten Bereichs stellt sich der Übergangswinkel $\alpha_T$ als Grenzwinkel des quadratischen und damit ersten Bereichs 501 ein. Am Ende des zweiten Bereichs 502 bei dem Grenzauslenkungswinkel $\alpha_G$ wird keine Ruhelage mehr erreicht, was als Ruhelagengrenze 503 gekennzeichnet ist.

Figur 5 zeigt somit eine Auslenkungskurve. Vorzugsweise wird vorgeschlagen, eine solche Auslenkungskurve oder dieser zu Grunde liegende Zusammenhänge anzulernen, insbesondere unter Verwendung eines neuronalen Netzes. Zweckmäßigerweise wird in einem solchen vorgeschlagenen Lernverfahren nicht direkt die in Figur 5 dargestellte Auslenkungskurve erlernt, sondern die absolute Rotorposition bzw. die jeweilige Stoppposition, die sich als Ruhelage einstellt, schließlich ist die Schwerpunktlage, also die Unwuchtwinkelposition α-priori nicht bekannt und soll durch das Verfahren ermittelt werden.

Die sich einstellende Kurve hängt maßgeblich von der Blattstellung, also dem Pitchwinkel ab, welcher frei gewählt werden kann, jedoch bei jedem Lerndurchlauf gleich gewählt werden muss. Je größer der gewählte Pitchwinkel ist, desto weniger hat der Rotor die Tendenz zur Vorwärtsdrehung und desto mehr hat er die Tendenz zur Rückwärtsdrehung. Je näher der Pitchwinkel an einer "idealen Fahnenstellung" ist, desto größer ist der Windgeschwindigkeitsbereich, in dem ein Stillstand des Rotors eintritt, und der Rotor nicht in einer langsamen Rotation verbleibt.

**Figur 6** zeigt ein Diagramm mit beispielhaft ermittelten Ergebnissen für einen Rotor mit einer Unwuchtmasse an einer Rotorposition bei 180°: Am Beispiel der Figur 4 erläutert würde das bedeuten, dass der außermittige Schwerpunkt bzw. eine Unwuchtmasse dem Rotorblatt mit der Referenz R gegenüberliegend angeordnet wäre. Das Diagramm stellt die Ruhepunktlage an der Ordinate und damit die Stoppposition $\alpha_S$ in Abhängigkeit von der Windgeschwindigkeit Vw an der Abszisse dar.

Für niedrige Windgeschwindigkeiten (unter 1m/s) entspricht die Ruhepunktlage, also die Stoppposition, der unteren Schwerpunktlage, also 180. Mit steigender Windgeschwindigkeit ist ein Auswandern der Ruhepunktlage in negativer Richtung zu erkennen. Dies bedeutet, dass der gewählte Pitchwinkel in diesem Beispiel bereits so groß war, nämlich größer als eine ideale Fahnenstellung, dass der Rotor 206 rückwärts gedreht wird.

Es wurden zwei Untersuchungen als Simulation durchgeführt, nämlich mit zwei unterschiedlichen Unwuchtmassen, nämlich eine mit 600kg und eine mit 1200kg, bei gleichem Abstand zur Rotordrehachse. Das Diagramm zeigt somit eine erste und zweite Ruhepunktkennlinie 601 (für 600kg) und 602 (für 1200kg). Für die beiden betrachteten Unwuchtmassen konnten lediglich Ruhelagen bestimmt werden, die um 5° von der Schwerpunktlage abweichen. Diese Auslenkung wurde bei der höheren Unwuchtmasse erst bei einer höheren Windgeschwindigkeit erreicht. Die für die Unwuchtmasse 1200kg gefundene Kurve entspricht der für die Unwuchtmasse 600kg gefundenen Kurve, aber mit dem Streckungsfaktor $1.4 = \sqrt{2}$. Dies ist erwartungsgemäß, da zur Auslenkung einer doppelt so schweren Unwucht eine doppelt so große Kraft nötig ist, welche bereits bei einer um $\sqrt{2}$ erhöhten Windgeschwindigkeit erreicht wird.

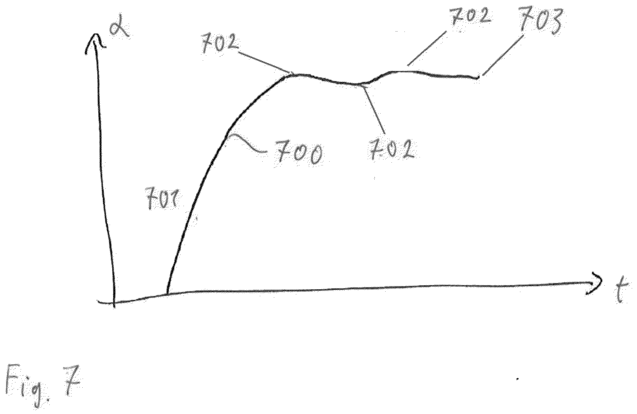

Für die Umsetzung des vorgeschlagenen Verfahrens kann ein Auspendeln untersucht werden, das in **Figur 7** erläutert ist.

Das nachfolgend beschriebene Verfahren wird vorzugsweise selbstständig aktiv, wenn die Anlage in "Fahnenstellung" stoppt. Dies passiert regelmäßig, z.B. bei:

- Stopps aufgrund der Schattenabschaltung,
- Überprüfung einer Sicherheitskette.

Ein weiterer Auslöser des Algorithmus ist ein Stopp wegen abfallender Windgeschwindigkeit auf einen zu geringen Wert, um die Windenergieanlage betreiben zu können, was auch als "Windmangel"-Stopp bezeichnet wird. Hier wurde erkannt, dass eine solche Situation in vorteilhafter Weise ausgenutzt werden kann, denn wenn der Rotor durch Windmangel stehen bleibt, werden die Blätter zurückgepitcht, damit bei einem Wiederanlauf der Rotor nicht in eine Stallsituation kommt. Zudem ist in einer solchen Situationen die Windgeschwindigkeit gering, was zur Ausführung des Algorithmus vorteilhaft ist.

Es kann aber, sollten obige Ereignisse nicht ausreichend häufig auftreten, in einer Windmangel-Phase, wenn die Windenergieanlage also auf eine Zunahme des Windes wartet, durch eine Steuerung, insbesondere Betriebssteuerung der Windenergieanlage, veranlasst werden, die Blätter in die Testfahnenstellung zu fahren, die also der Fahnenstellung ähnlich ist, um den Wuchtzustand des Rotors zu prüfen.

Mit dieser "Testfahnenstellung" wird dabei ein Blattwinkel bezeichnet, bei welchem der Rotor beinahe zum Stillstand kommt, sodass von außen kaum mehr eine Rotordrehbewegung wahrnehmbar ist. Es liegt jedoch immer noch ein leichtes aerodynamisches Drehmoment an, welches quadratisch mit der Windgeschwindigkeit zunimmt.

Der Verlauf der Rotorposition während eines Stoppvorgangs bei niedrigen Windgeschwindigkeiten ist in Figur 7 dargestellt, der einen Verlauf über mehrere Minuten zeigt.

Figur 7 zeigt somit ein Diagramm, in dem ein Positionsverlauf 700 als Verlauf der Rotorposition $\alpha$ an der Ordinate über die Zeit t an der Abszisse schematisch dargestellt ist. Das Diagramm dient der Veranschaulichung und weist daher keine konkreten Werte bzw. Einheiten auf.

Der Positionsverlauf 700 beginnt mit einer Startbedingung 701, die hier symbolisch das Erreichen einer Blattwinkel-Fahnenstellung bzw. dann einer Testfahnenstellung markiert. Diese Startbedingung kann z.B. aufgrund einer Schattenabschaltung auftreten, bei der die Windenergieanlage angehalten wird, um störenden Schattenwurf zu verhindern. Als weitere Vorbedingungen zur Ausführung des Verfahrens sollte geprüft werden, dass keine Rotorbremsen betätigt wurden, dass kein Generatormoment vorliegt, dass aufgrund der Außentemperatur kein Eisansatz zu erwarten ist, dass Lagertemperaturen und die Fettung eine ausreichende Lagerschmierung und keine Lagerschäden vermuten lassen, dass die Blattwinkel alle gleich sind, alle Blattwinkelsensoren funktionieren und auch die Rotorlagemessung funktioniert, und dass die Gondel windrichtungsnachgeführt ist.

In dem Positionsverlauf 700 sind dann drei Drehrichtungswechsel mit entsprechenden Drehrichtungsumkehrpunkten gezeigt, die als Umkehrpositionen 702 aufgenommen werden können, mit denen die Rotorlage um eine Ruhepunktposition 703 herum pendelt. Die Ruhepunktposition 703 wird entweder daran erkannt, dass über einen festgelegten Zeitraum keine weitere Drehbewegung mehr erfasst wurde, oder sie kann als Mittelwert aus mehreren sequentiellen Umkehrpositionen 702 bestimmt werden, die synonym auch als Drehrichtungsumkehrpunkte bezeichnet werden können. Die Ruhepunktlage muss innerhalb einer Zeitspanne erreicht werden, in der typischerweise keine nennenswerten Windgeschwindigkeitsänderungen auftreten (wenige Minuten). Vorzugsweise wird überprüft, ob diese Bedingung, dass keine nennenswerten Windgeschwindigkeitsänderungen auftreten, erfüllt ist.

Es erfolgt eine Aufzeichnung der beobachteten Ruhepunktpositionen 703, die synonym auch als Ruhepunktlagen bezeichnet werden können, über die dabei vorliegenden Windgeschwindigkeiten. Um Störungen durch Anemometerabschattungseffekte zu vermeiden, wird dabei vorzugsweise die letzte Windgeschwindigkeitsmessung bei schnell drehendem Rotor herangezogen. Das kann mit geeigneter Mittelwertbildung erfolgen, z.B. mittlere Windgeschwindigkeitsmessung über die letzten 120° Rotorumdrehung vor Erreichen der Blattwinkel-Fahnenstellung bzw. Testfahnenstellung.

Durch ein Regressionsverfahren werden aus den aufgezeichneten Daten folgende Ergebnisse ermittelt.

1. Es wird ermittelt, welche Ruhepunktlage sich ohne Windgeschwindigkeit einstellt. Diese wird als Schwerpunktlage bzw. Stoppposition betrachtet. Dadurch wird die Winkelposition der Unwucht bekannt bzw. kann daraus bestimmt werden, die als Unwuchtwinkelposition bezeichnet werden kann. Eventuelle Ausgleichsgewichte können gegenüber der ermittelten Position angebracht werden.

2. Es wird ermittelt, wie sich die Ruhepunktlage mit der Windgeschwindigkeit verschiebt, wodurch die Größe der Unwucht bekannt wird bzw. bestimmt werden kann. Dabei kann geprüft werden, ab welcher Windgeschwindigkeit sich gar keine Ruhepunktlage mehr einstellt, d.h. ab welcher Windgeschwindigkeit das aerodynamische Moment ausreicht, um den Rotor immer weiter zu drehen, oder wie sehr die beobachtete Kurve von einer Kurve abweicht, die für eine bekannte Referenzunwucht ermittelt wurde. Die Größe der ermittelten Unwucht kann dann abgeschätzt werden durch Multiplikation der bekannten Referenzunwucht mit dem Quadrat des Windgeschwindigkeitsverhältnisses der Referenzkurve zu der beobachteten Kurve.

Das Messverfahren zur Bestimmung der Rotorunwucht kann durch die vorgeschlagenen Ansätze automatisiert werden.

Es soll ohne zusätzliche Sensorik auskommen.

Damit soll eine massenhafte Überwachung des Wuchtzustands der Flotte ermöglicht werden.

Das Verfahren soll ohne zusätzliche Stillstandszeit auskommen, d.h. in ohnehin vorgesehenen Stopp-Situationen arbeiten.

Als Vorteil wurde zudem erkannt, dass die Erfindung grundsätzlich an jeder Windenergieanlage angewendet werden kann, die über eine Messung der Rotorposition und der Windgeschwindigkeit verfügt.

Mit dem vorgeschlagenen Verfahren wird eine Selbstdiagnose der Windenergieanlage hinsichtlich einer eventuellen Massenunwucht ermöglicht. Damit können Stillstandzeiten, übermäßiger Verschleiß von Komponenten, und Kosten für Serviceeinsätze und externe Gutachten vermieden werden.

**Patentansprüche**

1. Verfahren zum Erfassen einer Massenunwucht eines mehrere Rotorblätter aufweisenden Rotors einer Windenergieanlage, wobei die Rotorblätter in ihrem Blattwinkel verstellbar sind und eine Drehposition des Rotors als Rotorposition erfassbar ist, umfassend die Schritte:

  - Betreiben der Windenergieanlage in einem Testbetrieb, in dem

    - die Rotorblätter in eine einer Fahnenstellung ähnliche Testfahnenstellung gestellt werden, die von der Fahnenstellung um nicht mehr als einen Testwinkel abweicht und
    - die Windenergieanlage keine Leistung erzeugt,

  - Ermitteln wenigstens einer Stoppposition, in der der Rotor in dem Testbetrieb stehen bleibt, oder um die er auspendelt, und
  - Ermitteln einer Unwuchtwinkelposition aus der wenigstens einen Stoppposition.

2. Verfahren nach Anspruch 1, **dadurch gekennzeichnet, dass**

- mehrere Stopppositionen jeweils zusammen mit einer zugeordneten Windgeschwindigkeit aufgenommen werden, insbesondere bei unterschiedlichen Windgeschwindigkeiten, und
- aus den mehreren Stopppositionen mit zugeordneten Windgeschwindigkeiten eine fingierte Stoppposition bei Windstille berechnet wird und
- aus der fingierten Stoppposition die Unwuchtwinkelposition abgeleitet wird, wobei insbesondere die fingierte Stoppposition als die Unwuchtwinkelposition genommen wird.

3. Verfahren nach Anspruch 1 oder 2, **dadurch gekennzeichnet, dass**

- zum Erfassen eines Unwuchtbetrags als Größe der Massenunwucht der Blattwinkel der Rotorblätter so eingestellt wird, dass sich eine Drehkraft aus dem Wind auf den Rotor ergibt, die den Rotor aus einer Stoppposition und/oder Unwuchtwinkelposition in eine Auslenkposition dreht oder in eine anhaltende Drehbewegung versetzt, wobei
- die Auslenkposition oder die Drehposition bzw. die Drehbewegung erfasst wird,
- die Auslenkposition eine Drehposition des Rotors relativ zur Unwuchtwinkelposition beschreibt, und
- in Abhängigkeit von der Auslenkposition oder der Drehposition bzw.
- in Abhängigkeit von der anhaltenden Drehbewegung
- der Unwuchtbetrag ermittelt wird, insbesondere

  - unter weiterer Berücksichtigung einer erfassten insbesondere gemessenen Windgeschwindigkeit und/oder
  - unter weiterer Berücksichtigung einer ermittelten Drehkraft und/oder
  - unter weiterer Berücksichtigung des eingestellten Blattwinkels.

4. Verfahren nach einem der vorstehenden Ansprüche, **dadurch gekennzeichnet, dass**

- im Testbetrieb mehrere Rotorpositionen in zeitlicher Abfolge aufgezeichnet werden, wobei
- wenn der Rotor dabei auspendelt, Umkehrpositionen erfasst werden, in denen der Rotor seine Drehrichtung umkehrt, und
- in Abhängigkeit von den Umkehrpositionen die Stoppposition erfasst wird, insbesondere als Mittelwert der Umkehrpositionen.

5. Verfahren nach einem der vorstehenden Ansprüche, **dadurch gekennzeichnet, dass**

- von einer Pendelbewegung des Rotors eine Periodendauer oder Pendelfrequenz erfasst wird, und
- die Massenunwucht m*l dem Betrage nach in Abhängigkeit von der erfassten Periodendauer bzw. der erfassten Pendelfrequenz bestimmt wird, vorzugsweise in Abhängigkeit von einer Neigung der Rotorachse relativ zu einer horizontalen Ebene, wobei

insbesondere die Massenunwucht dem Betrage nach bestimmt wird mit der Berechnungsformel:

$$m^*l = k_0 * (2*\pi/T)^2 * J/g/\cos(\alpha_T)$$

oder

$$m^*l = k_0 * (2*\pi/T)^2 * J/g \text{ bzw.}$$

$$m^*l = k_0 * (2*\pi*f)^2 * J/g/\cos(\alpha_T)$$

oder

$$m^*l = k_0 * (2*\pi*f)^2 * J/g$$

mit

$m^*l$: Betrag der Massenunwucht,
T: Periodendauer,
$f=1/T$: Pendelfrequenz,
J: Massenträgheitsmoment des Rotors um seine Rotorachse,
g: Erdbeschleunigung
$\alpha_T$: Neigungswinkel der Rotorachse zur horizontalen Ebene,
$k_0$: Kompensationsfaktor mit Werten zwischen 1 und 1,5,

wobei insbesondere eine kleine Pendelbewegung zu Grunde gelegt wird, bei der der Rotor nicht mehr als 60°, insbesondere nicht mehr als 30° zwischen zwei Umkehrpunkten der Pendelbewegung zurücklegt.

6. Verfahren nach einem der vorstehenden Ansprüche, **dadurch gekennzeichnet, dass**

- ein Zusammenhang zwischen einem bzw. dem Unwuchtbetrag und optional der Unwuchtwinkelposition einerseits und

  - eingestelltem Blattwinkel,
  - erfasster Windgeschwindigkeit, und
  - erfasster Auslenkposition oder Drehposition andererseits

- in einem Lernverfahren angelernt werden, insbesondere so, dass
- in mehreren Lerndurchläufen bei unterschiedlichen Windgeschwindigkeiten der Unwuchtbetrag und der eingestellte Blattwinkel variiert werden, und die Auslenkposition oder Drehposition jeweils aufgenommen wird.

7. Verfahren nach einem der vorstehenden Ansprüche, **dadurch gekennzeichnet, dass**

- das Verfahren zum Identifizieren der Massenunwucht ausgeführt oder ausgelöst wird, wenn ein Trudelbetrieb und/oder ein Verstellen der Rotorblätter in eine Fahnenstellung durch eine Umweltvorgabe, insbesondere eine Vorgabe zum Anhalten der Windenergieanlage wegen eines Schattenwurfs, oder wegen einer betrieblichen Vorgabe, insbesondere zur Überprüfung einer Sicherheitskette ausgelöst wird, und/oder
- das Verfahren zum Identifizieren der Massenunwucht ausgeführt oder ausgelöst wird, indem in einer Windmangelphase, bei geringer vorhandener Windgeschwindigkeit, insbesondere wenn die Windgeschwindigkeit unterhalb einer vorgegebenen Einschaltwindgeschwindigkeit liegt, gezielt der Testbetrieb ausgelöst wird, indem die Rotorblätter gezielt in die Testfahnenstellung gedreht werden, um die Massenunwucht zu identifizieren.

8. Verfahren nach einem der vorstehenden Ansprüche, **dadurch gekennzeichnet, dass**

- eine Identifikation der Massenunwucht ständig oder zumindest wiederholt durchgeführt wird, wenn ein Trudelbetrieb und/oder eine Betriebssituation zum Verstellen der Rotorblätter in eine Fahnenstellung auftritt,

- um Werte der Massenunwucht zu aktualisieren und/oder eine auftretende Massenunwucht zu identifizieren, insbesondere um eine Selbstdiagnose durchzuführen.

9. Verfahren nach einem der vorstehenden Ansprüche, **dadurch gekennzeichnet, dass**

- das Verfahren in einem Windpark und/oder für eine zur Überwachung vorgesehene Gruppe von Windenergieanlagen durchgeführt wird, sodass
- für jede der Windenergieanlagen die Massenunwucht identifiziert wird und insbesondere
- die so identifizierten Massenunwuchten und/oder Veränderungen der Massenunwuchten ausgewertet werden, um einen Gesamtzustand der Windenergieanlagen zu bewerten, wobei insbesondere

- eine Bewertung einer Komponentenfertigung durchgeführt wird und/oder
- ein Vertauschen von Rotorblättern zwischen Windenergieanlagen identifiziert oder überprüft wird und/oder
- Lebensdauerprognosen für den Windpark bzw. die Gruppe verbessert werden.

10. Verfahren nach einem der vorstehenden Ansprüche, **dadurch gekennzeichnet, dass**

- als Vorbedingung zum Ermitteln der Stoppposition, einer bzw. der Auslenkposition und/oder einer bzw. der Drehbewegung eines, mehrere oder alle Kriterien geprüft werden aus der Liste aufweisend

- keine Bremse ist betätigt,
- kein Generatormoment ist eingestellt,
- es liegt kein Eisansatz vor,
- Lagertemperaturen und Lagerfettungen lassen ausreichende Lagerschmierung erkennen,
- keine Lagerschäden wurden erkannt oder vermutet;
- die Blattwinkel aller Rotorblätter weisen denselben Wert auf,
- alle Blattwinkelsensoren funktionieren,
- eine Rotorlagemessung zur Erfassung der Rotorposition funktioniert, und
- eine Windrichtungsnachführung ist aktiv.

11. Verfahren nach einem der vorstehenden Ansprüche, **dadurch gekennzeichnet, dass**

- die Windgeschwindigkeit mittels eines Windgeschwindigkeitsmessgerätes erfasst wird, insbesondere mittels eines Anemometers, das auf einer Gondel der Windenergieanlage angeordnet ist, und/oder
- die Windgeschwindigkeit aus Betriebsdaten der Windenergieanlage ermittelt wird, und in beiden Fällen,
- die Windgeschwindigkeit vor dem Trudelbetrieb erfasst wird und als Windgeschwindigkeit bei Erreichen und Anhalten in der Stoppposition verwendet wird.

12. Verfahren nach einem der vorstehenden Ansprüche, **dadurch gekennzeichnet, dass**

- in Abhängigkeit von der identifizierten Massenunwucht, insbesondere in Abhängigkeit von der ermittelten Unwuchtwinkelposition und dem Unwuchtbetrag
- eine erste Ausgleichsposition und ein erstes Ausgleichsgewicht bestimmt werden und das erste Ausgleichsgewicht an der ersten Ausgleichsposition befestigt wird, wobei vorzugsweise

- nach Befestigung des ersten Ausgleichsgewichts die Identifikation einer Massenunwucht wiederholt wird, um eine zweite Ausgleichsposition und ein zweites Ausgleichsgewicht zu bestimmen und das zweite Ausgleichsgewicht an der zweiten Ausgleichsposition zu befestigen, und/oder

- das erste und/oder zweite Ausgleichsgewicht zusammen mit der ersten bzw. zweiten Ausgleichsposition so bestimmt werden, dass das erste bzw. zweite Ausgleichsgewicht in oder an einer bzw. der Nabe und/oder einem Spinner und/oder einem Rotorblatt befestigt wird.

13. Windenergieanlage mit einem mehrere Rotorblätter aufweisenden Rotor, wobei die Rotorblätter in ihrem Blattwinkel verstellbar sind und eine Drehposition des Rotors als Rotorposition erfassbar ist, wobei die Windenergieanlage dazu vorbereitet ist, ein Verfahren zum Erfassen einer Massenunwucht auszuführen, das folgende Schritte umfasst:

- Betreiben der Windenergieanlage in einem Testbetrieb, in dem

- die Rotorblätter in eine einer Fahnenstellung ähnliche Testfahnenstellung gestellt werden, die von der Fahnenstellung um nicht mehr als einen Testwinkel abweicht und
- die Windenergieanlage keine Leistung erzeugt,
- Ermitteln wenigstens einer Stoppposition, in der der Rotor in dem Testbetrieb stehen bleibt, oder um die er auspendelt, und
- Ermitteln einer Unwuchtwinkelposition aus der wenigstens einen Stoppposition.

14. Windenergieanlage nach Anspruch 13, **dadurch gekennzeichnet, dass**

- die Windenergieanlage einen Prozessrechner aufweist und
- die Windenergieanlage, insbesondere der Prozessrechner, dazu vorbereitet ist, ein Verfahren nach einem der Ansprüche 1 bis 12 auszuführen.

15. Windpark mit mehreren Windenergieanlagen nach Anspruch 13 oder 14.

Fig. 1

Fig. 2

Fig. 3

Fig. 4

Fig. 5

Fig. 6

Fig. 7

Europäisches
Patentamt

European
Patent Office

Office européen
des brevets

## EUROPÄISCHER RECHERCHENBERICHT

Nummer der Anmeldung

EP 24 18 3556

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 150 850 A1 (ALSTOM RENEWABLE TECHNOLOGIES [FR]) 5. April 2017 (2017-04-05) | 1,7-11, 13-15 | INV. F03D13/35 F03D17/00 |
| A | * Absatz [0036] - Absatz [0043] * ----- | 2-6 | |
| X | ES 2 376 815 A1 (ACCIONA WINDPOWER SA [ES]) 20. März 2012 (2012-03-20) | 1,7-15 | |
| A | * Abbildung 9 * * das ganze Dokument * ----- | 2-6 | |

RECHERCHIERTE
SACHGEBIETE (IPC)

F03D

Der vorliegende Recherchenbericht wurde für alle Patentansprüche erstellt

| Recherchenort | Abschlußdatum der Recherche | Prüfer |
|---|---|---|
| Den Haag | 14. November 2024 | Altmann, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 3556

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-11-2024

| Im Recherchenbericht angeführtes Patentdokument | Datum der Veröffentlichung | Mitglied(er) der Patentfamilie | | Datum der Veröffentlichung |
|---|---|---|---|---|
| EP 3150850 A1 | 05-04-2017 | DK | 3150850 T3 | 21-02-2022 |
| | | EP | 3150850 A1 | 05-04-2017 |
| | | ES | 2906143 T3 | 13-04-2022 |
| ES 2376815 A1 | 20-03-2012 | KEINE | | |

EPO FORM P0461

Für nähere Einzelheiten zu diesem Anhang : siehe Amtsblatt des Europäischen Patentamts, Nr.12/82